# EUROPEAN PATENT APPLICATION

(11) **EP 1 574 719 A2**
(43) Date of publication of application: **14.09.2005**
(21) Application number: 05250684.7
(22) Date of filing: 07.02.2005
(51) Int. Cl.: F04D 29/66

(54) **Method and apparatus to reduce vibrations in a pumping arrangement**

(30) Priority: 19.02.2004 US 781993
(71) Applicant: THE BOC GROUP, INC., New Jersey 07974-2082 (US)
(72) Inventor: Huntley, Graeme, Clevedon North Somerset BS21 6TH (GB)
(74) Representative: Booth, Andrew Steven

(57) **Abstract**

In a system that includes an active magnetic bearing, a magnetic bearing may induce vibration in anti-phase with an unwanted vibration so that the total vibration in the system is reduced. A magnetic bearing in one pump may be used to cancel vibration from another pump in this way.

## Description

This invention relates generally to pumping arrangements and systems, in particular vacuum pump systems and ways to reduce the vibrations in such systems.

Pumps are widely used in industrial applications, such as the semiconductor industry, where it is necessary to create a vacuum in a process chamber. For example, chemical vapour deposition, sputtering and etching are all carried out in a vacuum environment and so equipment for these processes is generally connected to a vacuum pump or a system of vacuum pumps.

Semiconductor processing normally takes place in an extremely clean, controlled environment. As small particles of foreign material can damage semiconductor devices, great care is taken to eliminate any such particles from the manufacturing area. Small changes in the environment may affect sensitive processes. To overcome these problems, a "fab" is created in which the air is filtered and factors such as temperature and humidity are carefully controlled. Maintaining this environment is extremely costly, and so some equipment that is not directly used to process semiconductors may be located outside of the fab. Vacuum pumps are often located outside the fab in a "sub-fab" (typically a basement underneath the fab) that is maintained at a lower level of cleanliness than the fab area.

Certain semiconductor equipment requires a high level of vacuum that is achieved with a turbomolecular pump (TMP). TMPs have a rotor with blades that cause gas molecules to be expelled from the pump when they strike the blades. The rotor typically spins at extremely high speeds, and so good bearings are important. One type of bearing that is used for this application is a magnetic bearing, which allows the rotor to spin without physically contacting the static portion of the pump. Passive magnetic bearings and active magnetic bearings are used. Active magnetic bearings have electromagnets that maintain the position of the rotor. If the rotor position changes, the change is detected by a sensor and the current to the electromagnets is adjusted to bring the rotor back to its intended position. Typical arrangements of magnetic bearings in a TMP include having a passive bearing holding the lower end of the rotor and active bearings at the upper end controlling the x, y and z-axis position of the upper end. Alternatively, active bearings may be used at the lower end also.

TMPs generally operate at reduced pressure (sub-atmospheric pressure), and so they are usually configured with a backing pump that reduces the pressure at the exhaust side of the TMP to a point where the TMP can operate efficiently. Typically a backing pump is a dry pump that is located outside the fab in a sub-fab area.

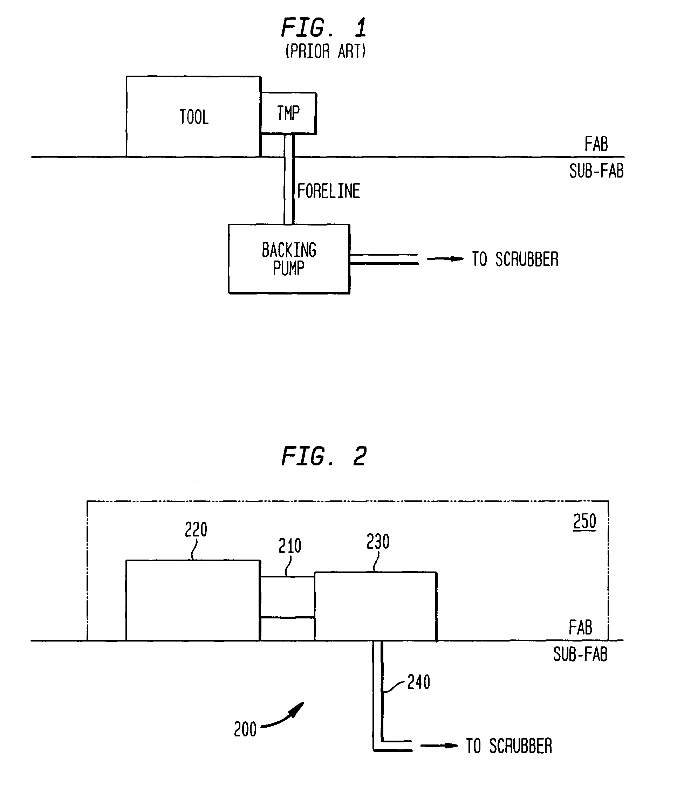

Figure 1 shows a typical arrangement of a semiconductor processing tool with pumps, where a TMP is located in the fab and its backing pump is placed in a sub-fab. Examples of such tools include cluster tools that deposit layers by chemical vapour deposition (CVD) or physical vapour deposition (PVD) and tools that etch material from a substrate.

Certain problems arise as a result of placing a backing pump away from a TMP. The line connecting the TMP to the backing pump (the foreline) may be long and have a significant volume. This adds to the time required to pump down the chamber and may necessitate a larger backing pump. Different foreline configurations may be required for different chambers because of obstructions and varying distance between the TMP and backing pump. These different configurations may result in process variation from one chamber to another that is highly undesirable.

An alternative arrangement is to place the backing pump close to the TMP. The backing pump may be in the fab, connected to the TMP. The TMP, in turn, is connected to a processing chamber. By keeping these components close together, foreline induced variations may be eliminated; a smaller, cheaper backing pump may be used; costly foreline installation may be avoided and space may be saved in the sub-fab area. One problem encountered, however, when a backing pump is close to the TMP is unwanted vibration from the backing pump. Backing pumps such as dry pumps generally create considerable vibration. When backing pumps are remote from the chamber, the vibrations reaching the chamber are diminished because of the distance they must travel. When a backing pump is connected directly to a TMP, or in close proximity, the vibrations from the backing pump are transmitted to the TMP and to the chamber. This may be undesirable for certain processes. Some process equipment is sensitive to vibration because it can cause wafer movement from the set position and within metrology or lithography applications it can distort images or exposures.

In a first aspect, the present invention provides a method of reducing vibration in a pumping arrangement, the method comprising the steps of measuring a first vibration; and producing a second vibration in a pump of the pumping arrangement, the second vibration being in anti-phase with the first vibration.

In a second aspect, the present invention provides a method of active vibration reduction in a pumping arrangement, the method comprising the steps of measuring a first vibration, generating a control signal in response to the first vibration, and sending the control signal to a magnetic bearing of a pump of the pumping arrangement to induce a second vibration in the pump, the second vibration being in opposition to the first vibration such that the sum of the first vibration and the second vibration is less than the first vibration.

In a third aspect, the present invention provides a pumping arrangement comprising a pump comprising a magnetic bearing, a vibration detector for generating a detection signal in response to a first vibration, and control means for sending to the magnetic bearing in response to the detection signal a control signal for inducing a second vibration in the pump.

In a fourth aspect, the present invention provides a pumping arrangement comprising a first pump, a second pump comprising a magnetic bearing, a vibration detector for generating a detection signal in response to a first vibration produced by the first pump, and control means for sending to the magnetic bearing in response to the detection signal a control signal for inducing a second vibration in the second pump.

In the preferred embodiment, an active vibration reduction system uses a magnetic bearing to produce a vibration to cancel an unwanted vibration. Unwanted vibration may come from a backing pump connected to a TMP, especially where the backing pump and the TMP are close together. The unwanted vibration propagates through the TMP to an enclosure, or host system. Vibration may be sensed where the TMP is attached to the enclosure. For example, a sensor placed on the inlet flange of the TMP may be used. The sensor sends a signal to the TMP controller indicating the phase and amplitude of the vibration. Based on the signal from the sensor, a modified control signal is sent to a magnetic bearing in the TMP. The modified control signal induces a vibration in the TMP that is in anti-phase with the unwanted vibration. This means that it tends to cancel the unwanted vibration resulting in less vibration in the enclosure.

The invention is not limited to TMPs. Other components that have magnetic bearings could be used to produce vibration that cancels unwanted vibration. This could include compressors or bobbins in textile manufacturing.

Preferred features of the present invention will now be described, by way of example only, with reference to the accompanying drawings, in which:
Figure 1 illustrates a prior art pump system with a backing pump in a sub-fab;
Figure 2 illustrates an example of a pumping arrangement with both TMP and backing pump located in the fab;
Figure 3 illustrates a cross-sectional view of a turbomolecular pump; and
Figure 4 illustrates a pumping arrangement according to one embodiment of the present invention.

Figure 2 shows an example of a pumping arrangement 200 in which TMP 210 is directly connected to an enclosure, or "host", 220 on one side and connected to a backing pump 230 on the other side. In other embodiments, lines may connect these components. The backing pump 230 is connected to an exhaust line 240 that is connected to a scrubber (not shown) that may be located in a number of different positions, for example, outside the fab 250, in the sub-fab or within the fab environment next to the pump 230. The TMP 210, host 220 and backing pump 230 are all located in the fab 250 in this example.

In use, gas is pumped from the host 220 by the TMP 210. The host 220 may be any apparatus that is evacuated by a pumping arrangement. Examples include cluster tools used in semiconductor processing such as, but not limited to, chemical vapour deposition (CVD), physical vapour deposition (PVD) or etch. The TMP 210 is typically mounted to a single chamber of a cluster tool and is dedicated to that chamber. Where several chambers are present in a cluster tool, each may have a respective TMP. These may each have a respective dedicated backing pump(s). Separate chambers may be isolated from each other so that a single chamber may be pumped at a time. Gases may be introduced into individual chambers to etch a wafer or to deposit material on a wafer. These gases must be pumped from the chambers in order to maintain the necessary vacuum and to prevent process byproducts from contaminating the process. Therefore, pump size and configuration is largely dependent on the particular process used and the tool configuration.
Exhaust gas from the TMP 210 is conveyed to the backing pump 230 and to an exhaust line that ultimately extends out of the fab. This may lead to a scrubber, as shown in Figure 2, or to some other waste disposal system.

This pumping arrangement eliminates the long foreline between the TMP and the backing pump that was shown in Figure 1. The TMP 210 may be either directly connected to the backing pump 230 or may be connected by a short line with relatively small volume. Thus, the impedance between the TMP 210 and the backing pump 230 is reduced. As a result, the backing pump 230 may be smaller than it would be if a long foreline were used. Pumping down the enclosure to its target vacuum level may also be quicker because of the reduced volume.

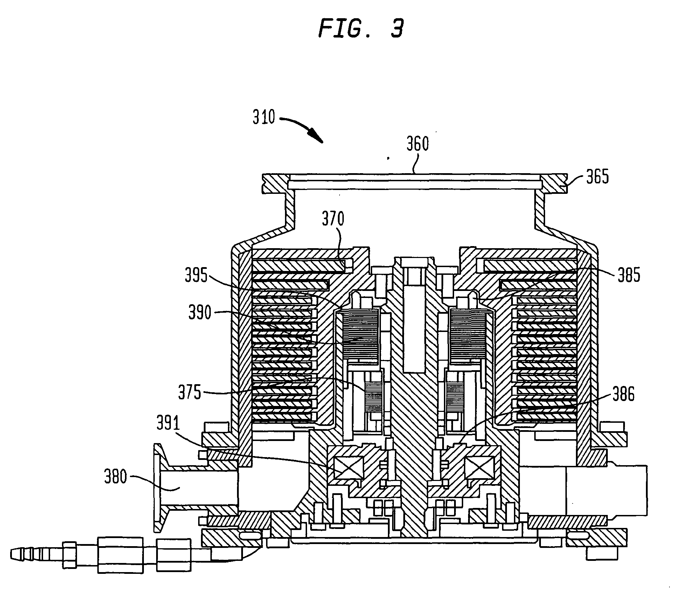

Figure 3 shows an example of a TMP 310, which is suitable for use as the TMP 210 of Figure 2. The inlet 360 of TMP 310 may be connected to a host, or to a foreline by inlet flange 365. The TMP 310 includes a rotor assembly 370 that is driven by an electrical motor 375 to rotate at high speed to motivate gas molecules through the TMP 310. Outlet 380 allows exhaust gas to be expelled from the TMP 310. Typically the outlet 380 is connected to a backing pump that provides reduced pressure at the outlet 380 of the TMP 310. Thus, the TMP 310 causes gas molecules to move from an area of high vacuum at inlet 360 to a region of moderate vacuum at outlet 380.

TMP rotor assembly 370 may be supported by two different types of bearings. Magnetic bearings allow the rotor assembly to turn without physical contact with the static portions of the pump, and backup mechanical bearings prevent damage to the pump by restraining the rotor assembly if the magnetic bearings fail. In Figure 3, an upper mechanical back-up bearing 385 and a lower mechanical back-up bearing 386 are positioned to support the rotor assembly 370.

Two types of magnetic bearings may be used. Passive magnetic bearings use permanent magnets to maintain the rotor assembly position. These are simple but do not allow precise control. Active magnetic bearings use electromagnets to maintain a rotor assembly position. By changing the current to the electromagnets the force on the rotor assembly, and thus the position of the rotor assembly, may be adjusted. In order to use active magnetic bearings to maintain the rotor assembly position, the position must be accurately sensed and the current to the bearings must be adjusted in response to the sensed position. TMP 310 includes active upper x and y axes bearing 390. TMP also includes a passive lower bearing 391 that maintains the position of the lower portion of the rotor assembly 370 along the x-axis and the y-axis and an active element that maintains the rotor assembly position in the z-axis. Because the position of the rotor assembly 370 is actively controlled in three axes, this is considered a three axes TMP. Five axes TMPs are also used. These are similar to TMP 310 of Figure 3 but with the passive lower bearing replaced with an active bearing. Thus, a five axes TMP has active control of the x and y axes position of the lower portion of the rotor in addition to the three controlled axes described above.

Upper radial sensor 395 monitors the position of the upper portion of the rotor assembly 370 as it rotates. The radial sensor 395 is capable of detecting small deviations in the position of the rotor assembly 370 and generating an electrical signal in response thereto. The signal generated by the sensor 395 is generally used to modify the current in the x and y axes bearing 390 to keep the rotor assembly 370 centred within the x and y axes bearing 390. Generally, the signal from the radial sensor 395 is sent to a controller (not shown) that determines the correction that must be made to the position of rotor assembly 370 and the current necessary to achieve this. The controller then modifies the current to the x and y axes bearing 390 accordingly.

The axis of rotation of a rotating rotor assembly is usually selected to be its inertial axis. This is not always the same as its geometric axis, as the rotor assembly is not always perfectly symmetric about its geometric axis. Maintaining rotation about the inertial axis may be achieved by using a notch filter or high pass filter to give the active bearing low stiffness at the rotational frequency but high stiffness at other frequencies. In some applications the rotor assembly may be rotated about its geometric axis to give a maximum clearance with static portions of the TMP. This may be achieved by having high bearing stiffness at the rotational speed. Active magnetic bearings may thus maintain rotor assembly position and reduce vibration in the TMP.

Active bearings may also be used to produce vibration. If the current to the bearing is modulated with a particular frequency, then vibration with that frequency is generated between the rotor assembly and the static portions of the pump. Such a signal may be overlaid on the control signal that is used to maintain rotor assembly position so that the rotor assembly is caused to vibrate while its position is still limited by the regular control signals. For example, if an audio signal is used as an overlay, the pump may be made to reproduce that audio signal.

A magnetic bearing may be used to create vibration that is in anti-phase with an unwanted vibration so that destructive interference occurs and the total vibration is reduced. Anti-phase vibration has approximately the same frequency as the original vibration but is opposite in phase. Thus the peaks of the anti-phase vibration coincide with the troughs of the unwanted vibration so that the two vibrations tend to cancel each other out.

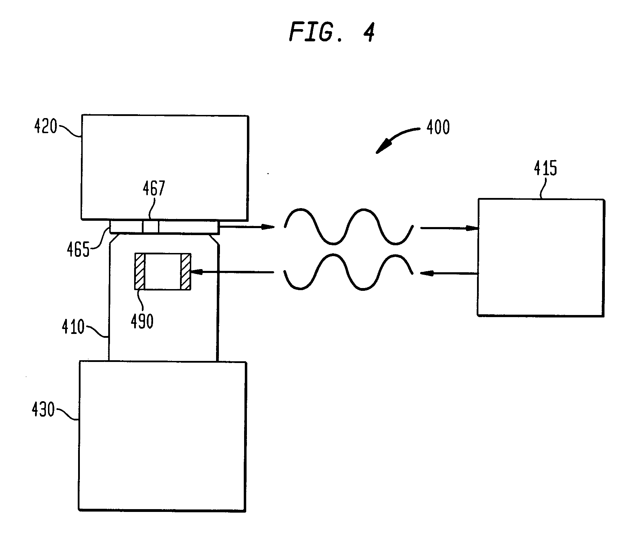

Figure 4 illustrates a pumping arrangement 400 in which a vibration is created by an active magnetic bearing 490 and the vibration is used to reduce overall vibration in the pumping arrangement 400. A vibration sensor 467 is located on a flange 465 of the TMP 410 and produces a signal that indicates the vibration at that point. This signal is sent to a controller 415 for controlling the active magnetic bearings 490 of the TMP 410. The controller 415 uses the signal to modify the current sent to the active magnetic bearings 490. Normally, a controller would modify the current only in response to a position sensor in order to keep the rotor assembly in position. Here, the signal is modified to cause the TMP 410 to vibrate so that the total vibration at the inlet flange 465 is reduced. Based on the vibration measured by the vibration sensor 467, the controller 415 calculates the magnitude and phase of vibration needed to eliminate or substantially reduce vibration at the inlet flange. The controller then modifies the current to the magnetic bearing 490 to produce this vibration.

In this example, the vibration sensor 467 is at the inlet flange 465 of the TMP 410. This location allows the vibration sensor 467 to measure vibration being passed to the host 420 from the TMP 410. In this case, the unwanted vibration comes primarily from the backing pump 430, making this a suitable location for the vibration sensor 467. However, in other embodiments, a vibration sensor could be placed in other locations and unwanted vibrations from a source other than a backing pump could be reduced. For example, a sensor could be placed on the host itself. Vibration coming from another piece of equipment attached to a host could be reduced in this way

While embodiments of the present invention have been shown and described, changes and modifications to these illustrative embodiments can be made without departing from the present invention in its broader aspects. Thus, it should be evident that there are other embodiments of this invention which, while not expressly described above, are within the scope of the present invention and therefore that the scope of the invention is not limited merely to the illustrative embodiments presented.

## Claims

1. A method of reducing vibration in a pumping arrangement, the method comprising the steps of measuring a first vibration; and producing a second vibration in a pump of the pumping arrangement, the second vibration being in anti-phase with the first vibration.

2. A method according to Claim 1, wherein the pump is a turbomolecular pump.

3. A method according to Claim 1 or Claim 2, wherein the first vibration is measured at an enclosure to which the pumping arrangement is connected.

4. A method according to any preceding claim, wherein the second vibration is produced by a magnetic bearing in the pump.

5. A method according to any preceding claim, further comprising sending a signal to the pump in response to the first vibration.

6. A method according to any preceding claim, wherein the first vibration is generated by a second pump that is connected to the first-mentioned pump.

7. A method of active vibration reduction in a pumping arrangement, the method comprising the steps of measuring a first vibration, generating a control signal in response to the first vibration, and sending the control signal to a magnetic bearing of a pump of the pumping arrangement to induce a second vibration in the pump, the second vibration being in opposition to the first vibration such that the sum of the first vibration and the second vibration is less than the first vibration.

8. A method according to Claim 7, wherein the first vibration is measured at an enclosure connected to the pumping arrangement.

9. A method according to Claim 7, wherein the first vibration is measured at an inlet of the pump.

10. A pumping arrangement comprising a pump comprising a magnetic bearing, a vibration detector for generating a detection signal in response to a first vibration, and control means for sending to the magnetic bearing in response to the detection signal a control signal for inducing a second vibration in the pump.

11. A pumping arrangement according to Claim 10, wherein control means is configured to send to the magnetic bearing a control signal for inducing a second vibration that is in anti-phase with the first vibration.

12. A pumping arrangement according to Claim 10 or Claim 11, further comprising a flange for connecting the pump to an enclosure.

13. A pumping arrangement according to Claim 12, wherein the vibration detector is attached to the flange.

14. A pumping arrangement comprising a first pump, a second pump comprising a magnetic bearing, a vibration detector for generating a detection signal in response to a first vibration produced by the first pump, and control means for sending to the magnetic bearing in response to the detection signal a control signal for inducing a second vibration in the second pump.

15. A pumping arrangement according to Claim 14, wherein the first pump is a dry pump.

16. A pumping arrangement according to Claim 14 or Claim 15, wherein the second pump is a turbomolecular pump.

17. A pumping arrangement according to any of Claims 14 to 16, comprising means for connecting the pumping arrangement to an enclosure.

18. A pumping arrangement according to Claim 17, wherein the vibration detector is mounted on the connecting means.

19. A pumping arrangement according to any of Claims 14 to 18, wherein the second pump is configured to remove gas from an enclosure, and the first pump is attached to the second pump and is configured to remove gas from the second pump.
